Europäisches Patentamt

European Patent Office

Office européen des brevets

(19)

(11) **EP 1 653 277 A1**

(12) **EUROPEAN PATENT APPLICATION**
published in accordance with Art. 158(3) EPC

(43) Date of publication:
03.05.2006 Bulletin 2006/18

(51) Int Cl.:
*G02F 1/335* (1990.01)    *F21S 4/00* (2000.01)

(21) Application number: 04747560.3

(22) Date of filing: 15.07.2004

(86) International application number:
**PCT/JP2004/010094**

(87) International publication number:
**WO 2005/008323 (27.01.2005 Gazette 2005/04)**

(84) Designated Contracting States:
**DE ES FR GB**

(30) Priority: **16.07.2003 JP 2003275140**
      **12.07.2004 JP 2004204443**

(71) Applicant: **SHARP KABUSHIKI KAISHA**
**Osaka-shi, Osaka 545-8522 (JP)**

(72) Inventors:
• **NANBU, Kohei**
  **Yaita-shi, Tochigi 3292141 (JP)**

• **MORIYASU, Mitsuhiro**
  **Shioya-gun, Tochigi 3291323 (JP)**
• **TANAKA, Kazuko**
  **Sharp Kabushiki Kaisha,Audio-Visual**
  **Yaita-shi, Tochigi 3292193 (JP)**

(74) Representative: **Müller - Hoffmann & Partner**
**Patentanwälte**
**Innere Wiener Strasse 17**
**81667 München (DE)**

(54) **LIQUID CRYSTAL DISPLAY DEVICE AND BACK-LIGHT DEVICE**

(57)    In a backlight unit provided with a plurality of optical sheets, a first optical sheet is characterized by having different coefficients of linear expansion in two different directions (a first direction and a second direction) with the coefficient of linear expansion in the first direction larger than that in the second direction. A second optical sheet is arranged adjacently to the first optical sheet. The coefficient of linear expansion of the second optical sheet in approximately the same direction as the first direction of the first optical sheet is approximated to the coefficient of linear expansion of the first optical sheet in the first direction.

FIG. 1 A

EP 1 653 277 A1

FIG. 1 B

First direction

Second direction

6

7

**Description**

FIELD OF THE INVENTION

The present invention relates to a backlight unit and a liquid crystal display device provided with optical sheets.

BACKGROUND OF THE INVENTION

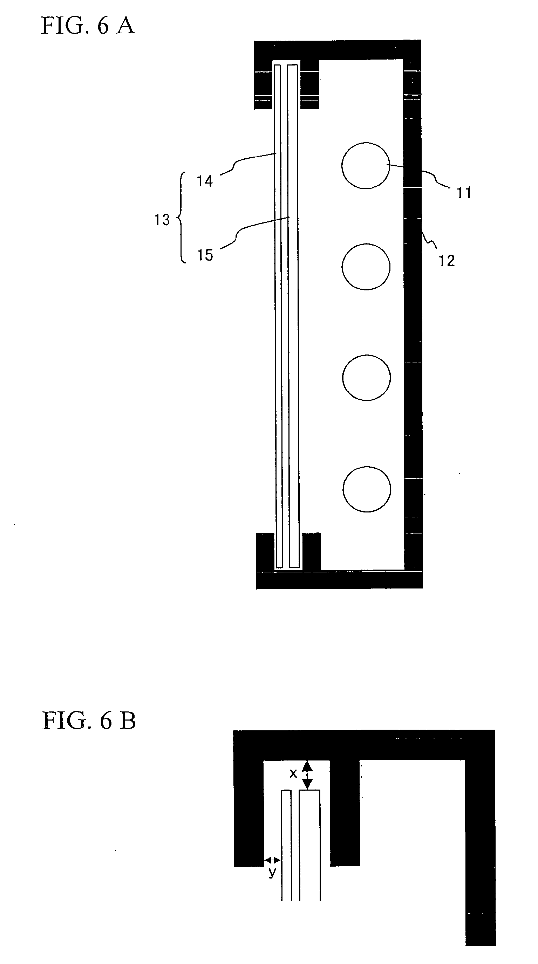

Recently, liquid crystal display devices are growing in use as a flat panel display, expanding in application to liquid crystal TV and the like. A simple structural example of a backlight unit used for a liquid crystal display device is shown in Fig. 6A.

The backlight unit shown in Fig. 6A is a direct backlight unit comprising light sources 11, a housing 12 that houses the light sources 11 and is provided with an opening to allow irradiation of light from the light sources 11 toward the front, and optical members 13 that are placed at the opening and allow transmitting light from the light sources and converting it into light with desirable brightness distribution. The optical members 13 are formed of, for example, a prism sheet (optical sheet 14) that guides the light source light efficiently to the opening, a diffusion plate (optical plate 15) that diffuses the light source light to enhance its utilization efficiency, and the like. A liquid crystal display device is constructed by providing a liquid crystal panel (not shown) on the opening side of the housing 12.

The peripheral edge of the optical members 13 is arranged in a state that certain spaces x, y are provided at the opening of the housing 12 as shown in Fig. 6B. Since the optical members 13 expand by heat and elongate due to radiant heat from the light sources 11 and heat rise induced by driving of various circuits when the backlight unit is used for the liquid crystal display device, this clearance space is reserved for the amount of expansion.

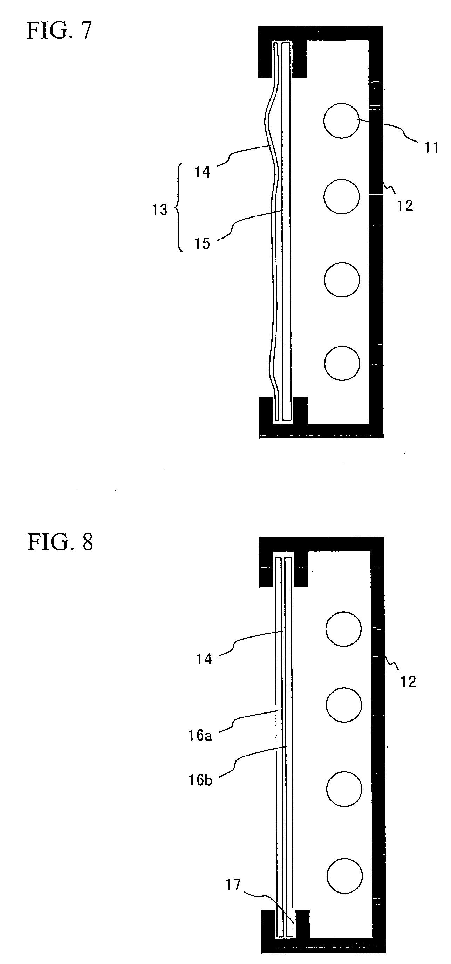

The liquid crystal display device as above tends to be made larger and thinner year by year. In accordance with this, the optical members 13 to be used are also upsized, and are made thin as well as low in rigidity like an optical sheet. When the liquid crystal display device having a structure shown in Fig. 6 is upsized, it transpires that an optical sheet 14 being thin and low in rigidity bends by its own weight to form warp and warp (hereinafter, collectively referred to as warp) as shown in Fig. 7. In order to prevent this from occurring, a method in which the optical members 13 are sandwiched and pressed tightly by eliminating the space y shown in Fig. 6B is conceivable. In this method, however, an elongation of the optical members 13 by thermal expansion, in turn, causes warps to be formed as described above.

"Warp" mentioned in this specification means a state that an optical sheet bends and does not keep a fully extended shape.

Warps thus formed results in the so-called unevenness of brightness, that is, partially blackish area (dark area) and non-blackish area (bright area) are generated on the display portion of a liquid crystal display device in use. Furthermore, the optical sheet 14 contacts a liquid crystal panel by bending, resulting in color irregularity called "blue stain", that is, the contact area is recognized visually as bluish on the screen, particularly at the time of displaying dark screen. This presents a very serious problem in providing a liquid crystal display device of high quality.

To address such a problem, an optical sheet being relatively thin and expandable by heat is sandwiched between two optical plates being relatively thick and rigid. A technology to prevent warp occurrence on the optical sheet due to its own weight or thermal expansion is proposed with this structure (for example, see Patent document 1).

The structure disclosed in Patent document 1 is explained with reference to Fig. 8. The optical sheet 14 shown in Fig.6 that is thin and low in rigidity is sandwiched between optical plates 16a and 16b that are relatively thick and high in rigidity. On the opening side of the housing 12, the optical members are pressed to one another with an elastic member 17 that has been designed not to inhibit thermal expansion of the optical sheet 14 and the optical plates 16a and 16b in consideration of the thermal expansion coefficients of the optical sheet 14 and the optical plates 16a and 16b, and the like. It is claimed that warp formation due to bending by own weights as well as due to thermal expansion can be prevented by this structure.

[Patent document 1] JP-A No.105074/1998

In the case where the optical sheet is constructed so as to be sandwiched between the optical plates as disclosed in Patent document 1, expansion of the optical sheet is, however, interfered due to a frictional force between the optical sheet and the optical plates when the optical sheet expands as the temperature of the display device increases. This frictional force is generated even if the optical sheet is flexibly held between the optical plates by the elastic member 17. It is very difficult to prepare the elastic member which does not interfere with expansion of the optical sheet even under any conditions where temperature to be used, static electricity, friction force, and the like are taken into consideration.

Generally, the optical sheet and the optical plate are made of a dielectric material such as plastic. Therefore, there is also a problem that expansion of the optical sheet is interfered by an adsorptive activity caused by static electricity that develops on each surface of the optical plates and the optical sheet.

In addition, this structure is contrary to the demand for making the liquid crystal display device thinner as mentioned above, and a merit in the use of a thin optical sheet is not exploited.

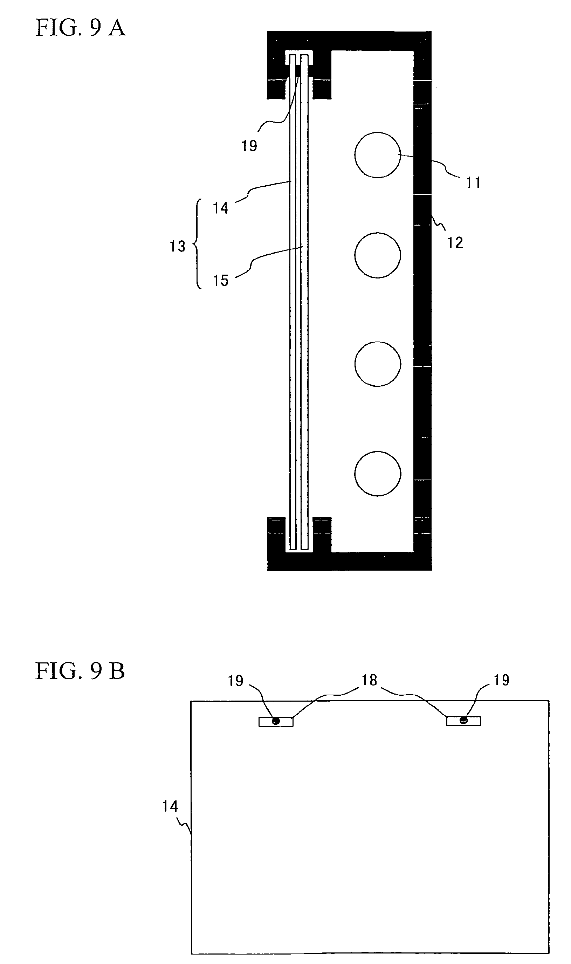

In accordance with upsizing the liquid crystal display device as described above, there is another technology besides that disclosed in Patent document 1, where bending of the optical sheet by its own weight is prevented by hanging the optical sheet on holders 19 as shown in Fig. 9.

Fig. 9B shows the optical sheet viewed from the front. The shape of holes 18 for hanging the optical sheet 14 is made a little roomier than that required for penetration of the holders 19 so as not to inhibit thermal expansion of the optical sheet 14 as shown in Fig. 9B. The design is elaborated by taking the expansion rate of the optical sheet 14 into consideration. As just described, many methods have been devised to prevent an optical sheet from bending by its own weight as well as from warp formation due to thermal expansion, thereby providing a liquid crystal display device of high quality.

In addition to the cause of warp formation mentioned above, static electricity generated in a backlight unit leads to mutual adherence of adjacent optical sheets and becomes a cause of warp formation. This phenomenon is explained using a structure of another backlight unit.

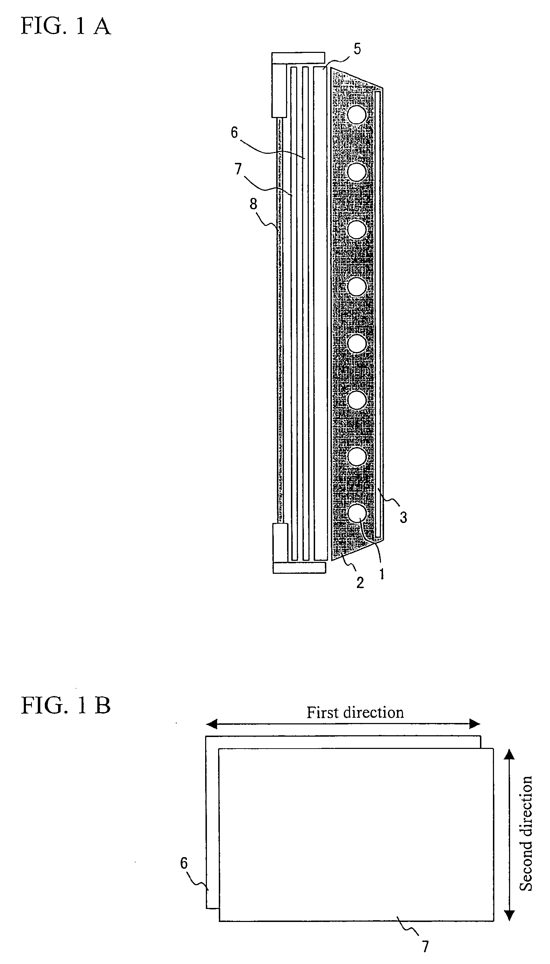

Fig. 1 illustrates the backlight unit different in structure from that shown in Fig. 6. This backlight unit is provided with light sources 1, a housing 2, a reflection plate 3, a diffusion plate 5, a reflective polarizing sheet 6, and a prism sheet 7. A liquid crystal display device is constructed by providing this direct backlight unit with a liquid crystal panel 8. The reflective polarizing sheet 6 and the prism sheet 7 are not so high in rigidity as compared to the optical plate 15 in Fig. 6, and are relatively thin and low in rigidity as in the case of the optical sheet 14.

A plurality of the light sources 1 are provided in the housing 2, and the reflection plate 3 is provided on the internal side opposite to the opening side of the housing 2, as shown in Fig. 1A. On the opening side of the housing 2, the diffusion plate 5 that diffuses light from the light sources 1, the reflective polarizing sheet 6 that selectively reflects/ transmits the diffused light, the prism sheet 7 that guides light transmitting the reflective polarizing sheet 6 to the liquid crystal panel 8, and the liquid crystal panel 8 that displays pictures by light guided through the prism sheet 7 are arranged in turn from the side of the light sources 1.

In recent years, a reflective polarizing sheet is frequently used for the liquid crystal TV, etc., among optical sheets used for the liquid crystal display device, as shown in the above structure. The introduction of the reflective polarizing sheet into a backlight unit enables polarized light in a specific direction among lights emitted from a light source to be selectively transmitted. In addition, selectively reflected light is depolarized through the action of diffuse reflection occurring on a reflection plate, etc., in the backlight. Among these depolarized lights, polarized light in a specific direction is again selectively transmitted through the reflective polarizing sheet, thereby making re-utilization of light effective. Thus, polarized light in the specific direction can be extracted more from the backlight, and more polarized light can be provided to a liquid crystal panel that requires polarization only in a specific direction. In this way, a significantly brighter liquid crystal display device can be provided, and the reflective polarizing sheet is frequently used for the backlight unit of current liquid crystal TV, etc., particularly in need of high brightness.

In the backlight unit with a plurality of thin optical sheets, the optical sheets are generally made of plastic materials. Owing to a property of plastic, it is extremely difficult to eliminate static electricity generated on each optical sheet. This static electricity produces an electric adsorptive force between the adjacent charged optical sheets, giving rise to a problem that these sheets are attracted to each other to form a state of adherence.

When the above reflective polarizing sheet 6 is taken as an example, it is supplied in a form attached with a protective sheet made of plastic or the like, and this sheet must be peeled off by an operation during the manufacturing process in many cases. However, the reflective polarizing sheet 6 and the protective sheet present in an integrated form are both made of plastic, and there exist many dipoles possessing positive and negative charges inside of these sheets. By the peeling-off operation, positive or negative countercharges are carried away from the surface of each sheet from which the protective sheet was peeled off, giving rise to generation of static electricity.

Moreover, when the light source 1 provided in the backlight unit is a fluorescent tube, a high voltage at high frequency (ca. 10-100kHz) is generally applied, which promotes generation of a leak current flowing from such component to peripheral conductors (metal materials such as metal frame and shield plate). Since free electrons arising from such charges tend to float inside of the backlight while the light source is being lighted, static electricity is readily induced.

Furthermore, when the backlight unit is transported, static electricity tends to be generated by mutual friction of each component inside of the backlight unit and the like. This tends to induce electrostatic charges in the backlight unit, and warps are easily formed in some cases after the light source is lighted (these phenomena are demonstrated by a lighting test after a vibration test and the like).

Still further, the warp phenomenon of the reflective polarizing sheet occurs at random. The reason for this is that the amount of electrostatic charge is associated with uncertain factors and the amount of static electricity varies depending on the charge condition of ambient air, the state of transport control mentioned above, and the like.

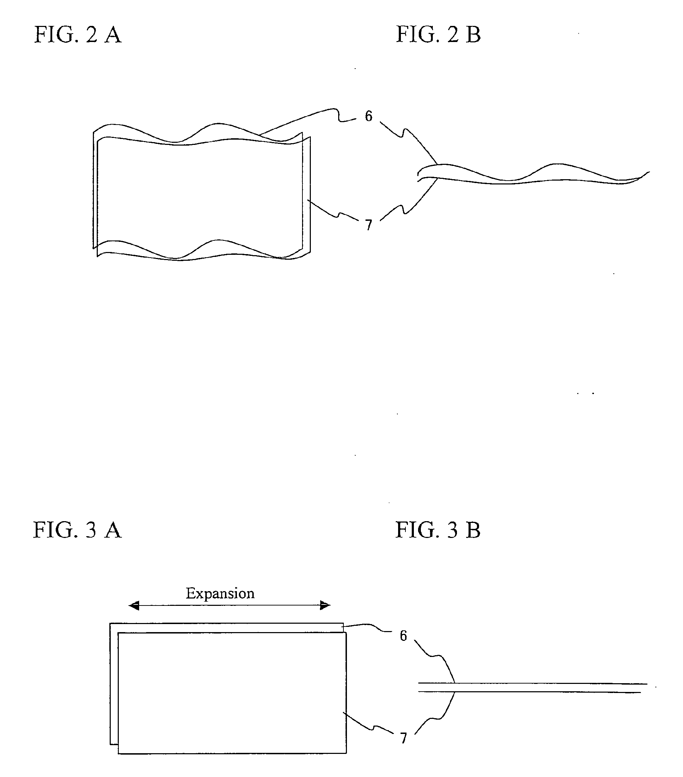

Thus, there are many factors generating static electricity on the optical sheets. In addition to the problem of thermal expansion of the optical sheets, mutual adherence of the optical sheets caused by static electricity makes it impossible to fully prevent warp formation that occurs on the optical sheets by employing the heretofore-mentioned structure in Fig. 9. When thermal expansion occurs in a state that the optical sheets are adhering to each other due to static electricity, warps are formed, for example, as shown in Fig. 2, on the optical sheets that are displaceably arranged.

SUMMARY OF THE INVENTION

In light of the abovementioned background, the present invention was accomplished after much trial and error and with the object of preventing warp formation on optical sheets arranged in a backlight unit in order to provide a liquid crystal display device of high quality by preventing unevenness of brightness and color irregularity which present a serious problem in the liquid crystal display device.

In consideration of the above problem, one aspect of the present invention provides a backlight unit comprising a first optical sheet having coefficients of linear expansions different between a first direction and a second direction with the coefficients of linear expansion in the first direction larger than that in the second direction and a second optical sheet arranged adjacently to the first optical sheet, where the coefficient of linear expansion of the first optical sheet in the first direction and that of the second optical sheet in the direction corresponding to the first direction are approximated to each other.

Another aspect of the present invention provides the backlight unit comprising the first optical sheet with a coefficient of linear expansion larger than a predetermined value in the first direction and the second optical sheet arranged adjacently to the first optical sheet, where the coefficient of linear expansion of the first optical sheet in the first direction and that of the second optical sheet in the first direction are approximated to each other.

According to still another aspect of the present invention, a reflective polarizing sheet is used for the first optical sheet, any one of the sheets selected from the group consisting of a prism sheet, wave sheet, diffusion sheet, and ITO sheet is used for the second optical sheet, and the first direction is the transmission axis direction of the reflective polarizing sheet.

According to still another aspect of the present invention, the second optical sheet is formed of at least any one of the materials selected from the group consisting of a polycarbonate resin, polystyrene resin, polyacetal resin, and nylon 6 resin.

According to still another aspect of the present invention, the second optical sheet is arranged on the side opposite to light sources provided in the backlight unit with respect to the first optical sheet.

According to still another aspect of the present invention, a liquid crystal display device is constructed from the backlight unit and a liquid crystal panel irradiated with light from the backlight unit.

According to still another aspect of the present invention, the liquid crystal display device is constructed from the backlight unit and the liquid crystal panel, where the reflective polarizing sheet is used for the first optical sheet, and the transmission axis direction of the reflective polarizing sheet and the short side direction of the liquid crystal panel are arranged in parallel.

According to still another aspect of the present invention, the liquid crystal display device is constructed from the backlight unit and the liquid crystal panel, where the prism sheet or the wave sheet is used for the second optical sheet and an array direction of the prism or the wave is arranged with a rotation around the axis of the normal direction of the screen by a certain angle with respect to the vertical direction or the horizontal direction of pixel array provided on the liquid crystal panel.

Even in a state where thermal expansion is large in the first direction with a larger coefficient of linear expansion of the first optical sheet having different coefficient of linear expansions in two different directions and the first optical sheet adheres to the adjacent second optical sheet due to static electricity, warp formation on each optical sheet can be prevented by virtue of the above-mentioned construction.

The warp formation on each optical sheet can be prevented even in a state where the first optical sheet characterized by having a large coefficient of linear expansion in a specific direction adheres to the adjacent second optical sheet due to static electricity.

BRIEF DESCRIPTION OF THE DRAWINGS

Fig. 1A is a cross section to show a structural example of a liquid crystal display device according to a first embodiment of the present invention;
Fig. 1B depicts an arrangement relation between a first optical sheet and a second optical sheet viewed from the side of a liquid crystal panel in the liquid crystal display device according to the first embodiment of the present invention;
Fig. 2A is a front view to show a bending state of the first optical sheet and the second optical sheet;
Fig. 2B is a top view to show the bending state of the first optical sheet and the second optical sheet;

Fig. 3A is a front view to show an expanding state of the first optical sheet and the second optical sheet when the present invention was applied;

Fig. 3B is a top view to show the expanding state of the first optical sheet and the second optical sheet when the present invention was applied;

Fig. 4 illustrates an arrangement relation between a liquid crystal panel and the second optical sheet of the liquid crystal display device according to a second embodiment of the present invention;

Fig. 5 is a cross section to show a structural example of the liquid crystal display device according to a third embodiment of the present invention;

Fig. 6A is a cross section to show a structural example of a conventional liquid crystal display device;

Fig. 6B is a cross section to show an arrangement relation between an optical sheet and a housing;

Fig. 7 is a cross section to show a bending state of the optical sheet in the conventional liquid crystal display device;

Fig. 8 is a cross section to show a structure of a liquid crystal display device disclosed in Patent document 1;

Fig. 9A is a cross section to show a hanging state of the optical sheet in the conventional liquid crystal display device; and

Fig. 9B is a front view to show an appearance of the optical sheet used in the hanging state in the conventional liquid crystal display device.

Fig. 10 is a relation between the frequency of warp occurrence in the temperature environment tests and the difference between the coefficient of linear expansion of the reflective polarizing sheet in the transmission axis direction and that of the prism sheet is shown.

DETAILED DESCRIPTION OF THE PREFERRED EMBODIMENTS

Exemplary embodiments of a liquid crystal display device according to the present invention are explained below with reference to the several accompanying drawings. It should be noted that a first direction and a second direction in the present specification are different directions.

A first embodiment of the liquid crystal display device is exemplified in Fig. 1A. The structure of the liquid crystal display device shown in Fig. 1A represents the one just described above. In particular, as thin optical sheets with relatively small rigidity, a reflective polarizing sheet 6 and a prism sheet 7 are arranged adjacently in the normal directions of each surface. The "adjacent" state may represent that the reflective polarizing sheet 6 and the prism sheet 7 are arranged either in contact with each other or with certain space inbetween. Fig. 1 illustrates them with a space given for convenience of explanation. Generally, these are in contact with each other (in a separable state) in many cases.

Fig. 1B shows an arrangement relation between the reflective polarizing sheet 6 and the prism sheet 7 which is viewed from the side of a liquid crystal panel 8. The reflective polarizing sheet 6 has a multi-layered structure of a thin film with orientation in a specific direction. The specific direction is the so-called transmission axis direction (the first direction), and the coefficient of linear expansion of the transmission axis direction is much larger compared to that of the reflection axis direction (the second direction). Thus, the sheet has a characteristic tendency to expand particularly to the transmission axis direction.

Specifically, the reflective polarizing sheet 6 in the present embodiment makes use of D-BEF-M (registered trademark) produced by 3M Co. The coefficient of linear expansion in the transmission axis direction (the first direction) of this sheet is about $7.62 \times 10^{-5}$/K, and the coefficient of linear expansion in the reflection axis direction is $2.29 \times 10^{-5}$/K. Its rigidity is small, and the sheet is vulnerable to warp formation.

An optical sheet that is thin and has a relatively small rigidity and a large coefficient of linear expansion in the direction of a specific direction (the transmission axis direction in the present embodiment) such as the reflective polarizing sheet 6 is hereinafter referred to as first optical sheet, and an optical sheet that is thin and arranged adjacently to the first optical sheet and has a relatively small rigidity is referred to as second optical sheet (the prism sheet 7 in the present embodiment).

In the first optical sheet that has different coefficients of linear expansion in two directions, the direction with the larger coefficient of linear expansion such as the transmission axis direction of the reflective polarizing sheet 6 is defined as first direction, and the direction with the smaller coefficient of linear expansion is defined as second direction. When the reflective polarizing sheet 6 is arranged as shown in Fig. 1B, the horizontal direction is referred to as the first direction (the transmission axis direction), and the vertical direction is referred to as the second direction (the reflection axis).

The prism sheet 7 has thermal expansion coefficients that are approximately equal (slightly different) in each direction corresponding to the first and the second directions when it is arranged adjacently to the reflective polarizing sheet 6. The coefficients of linear expansion are smaller than that in the transmission direction (the first direction) of the reflective polarizing sheet 6. The rigidity is small, but generally slightly larger when compared to that of the reflective polarizing sheet 6.

In the liquid crystal display device in which thin optical sheets with relatively small rigidity are arranged adjacently as described above, warps are formed due to thermal expansion of sheets and static electricity as shown in Fig. 2.

This phenomenon is considered as follows in the present embodiment: When the reflective polarizing sheet 6 and the prism sheet 7 are arranged adjacently and each sheet expands by heat, the expansion of the reflective polarizing sheet 6 in the transmission axis direction (the first direction) is inhibited by close adhesion caused by static electricity because the expansion amount of the reflective polarizing sheet 6 in the transmission axis direction (the first direction) is larger than that of the prism sheet 7 in the direction corresponding to the transmission axis direction (the first direction) of the reflective polarizing sheet 6. Moreover, since the rigidity of the reflective polarizing sheet 6 is smaller compared to that of the prism sheet 7, the warps are formed as shown in Fig. 2.

Thus-formed warps cause unevenness of brightness on the display surface. Furthermore, the warped sheet contacts a liquid crystal panel 8, resulting in generation of bluish color stain.

In the optical sheets that tend to induce static electricity as described, attention was focused particularly on the point that the expansion amount of the reflective polarizing sheet 6 caused by heat in the transmission axis direction (the first direction) is large, and that the amount of its expansion differs significantly from that of the adjacent prism sheet 7. Subsequently, prevention of the winkles from being formed was considered on the basis of expansion rates (coefficients of linear expansion) of each optical sheet in the present embodiment.

First, when a sheet that has tendency to expand in one direction (the transmission axis direction) such as the reflective polarizing sheet 6 is used and it is desirable to use such a sheet in view of optical characteristics, design change of the adjacent sheet is conceivable.

In the present embodiment where D-BEF-M (the reflective polarizing sheet 6) is used as the first optical sheet, the prism sheet 7 is formed of a material that has approximately the same expansion amount, in the direction of the prism sheet 7 (the second optical sheet) corresponding to the transmission axis direction (the first direction) of the reflective polarizing sheet 6, as the expansion amount of the reflective polarizing sheet 6 (the first optical sheet) in the transmission axis direction (the first direction).

This is because the reflective polarizing sheet 6 has different expansion coefficients in two directions as described before and the expansion amount in the transmission axis direction with a larger coefficient of linear expansion largely causes the generation of the warps. Paying attention to this point, prevention of the warps generated as shown in Fig. 2 was attempted by approximating the coefficient of linear expansion of the adjacently arranged prism sheet 7 in the direction corresponding to the transmission axis direction (the first direction) of the reflective polarizing sheet 6 to that of the reflective polarizing sheet 6 in the transmission axis direction.

Specifically, the prism sheet 7 was considered to be formed of a material that has a value of the coefficient of linear expansion close to that of the reflective polarizing sheet 6 in the transmission axis direction, that is, about $8 \times 10^5$/K. According to the plastic performance table (technical data from "Sumipex data booklet (published by Sumitomo Chemical Co. Ltd., Acryl Division)", it is preferred to form the prism sheet 7 of a material having a thermal expansion coefficient (corresponding to the above coefficient of linear expansion) of approximately 6 to $10 \times 10^{-5}$/K such as polystyrene (6 to $8 \times 10^{-5}$/K), polyacetal ($8.1 \times 10^{-5}$/K), polycarbonate ($6.6 \times 10^{-5}$/K) or nylon 6 ($8.3 \times 10^{-5}$/K).

As a representative material among these, a polycarbonate (PC)-type resin was used to form the prism sheet 7, and an experiment to observe the generation of warps on the reflective polarizing sheet 6 in the transmission axis direction (the first direction) was conducted. As a control sample, the prism sheet produced by 3M Co., "90/50-8T" type (coefficient of linear expansion, $2.25 \times 10^{-5}$/K) of "RBEF 90/50-8T" (registered trademark) series formed of polyester resin was used, and the frequency of warp occurrence was examined.

Since warp phenomenon is characteristic in random occurrence due to imponderables such as static electricity, the test method employed was a frequency test in which a multiple number of tests were conducted (the number of test, 20) for their comparison. As the result, the occurrence of the warp phenomenon on the reflective polarizing sheet 6 that exerts an influence on unevenness of liquid crystal screen was 1/20 time when the PC resin was used for the prism sheet 7, and 11/20 times when the polyester resin was used. Thus, it was confirmed that the occurrence of the warp phenomenon on the reflective polarizing sheet 6 was reduced when the prism sheet 7 was formed of the PC resin having a coefficient of linear expansion closer to that of the reflective polarizing sheet 6 in the transmission axis direction (the first direction).

With regard to this phenomenon, a comparison was made for the difference of expansion amounts between the prism sheet 7 and the reflective polarizing sheet 6 (in a case where the length of the first direction is 400 mm, and the range of temperature change is from 60 degrees C to 10 degrees C (the range of temperature change assuming a maximum range in which temperature rises from the time of power ON to the time when the temperature environment of the display device becomes constant)). The coefficient of linear expansion of the polyester resin (PE) used for the prism sheet 7 is 1.5 to $3 \times 10^{-5}$/K. Assuming that its average value is $2.25 \times 10^{-5}$/K, the expansion amount is calculated to be about 0.45 mm (expansion rate, 0.11) according to the following equation:

$$(\mathrm{Expansion\ amount}) = (\mathrm{Coefficient\ of\ linear\ expansion}) \times$$

$$(\mathrm{Range\ of\ temperature\ change}) \times (\mathrm{Length\ of\ the\ first\ direction})$$

$$= (2.25 \times 10^{-5}/K) \times (60\text{-}10K) \times (400\ mm)$$

$$= 0.45$$

In comparison with this, the coefficient of linear expansion of the PC resin is $6.6 \times 10^{-5}/K$, and the expansion amount of the sheet under the same conditions is calculated to be about 1.31 mm (expansion rate, 0.33).

On the other hand, the expansion amount of the reflective polarizing sheet 6 in the transmission axis direction is about 1.52 mm (expansion rate, 0.38). Therefore, the difference of expansion in the transmission axis direction between the polyester resin and the reflective polarizing sheet 6 is about 1.07 mm (difference in expansion rates, 0.27; difference in coefficients of linear expansion, $5.37 \times 10^{-5}/K$) according to the following equation:

$$(\mathrm{Difference\ of\ expansion}) = |(\mathrm{Expansion\ amount\ of\ PE}$$

$$\mathrm{resin}) - (\mathrm{Expansion\ amount\ of\ reflective\ polarizing\ sheet\ in\ the}$$

$$\mathrm{transmission\ axis\ direction})|$$

$$= |(0.45\ mm) - (1.52\ mm)|$$

$$= 1.07\ mm$$

In contrast, this difference of expansion is reduced to about 0.21 mm (difference in expansion rates, 0.05; difference in coefficients of linear expansion, $1.02 \times 10^{-5}/K$) in the case of the PC resin. On this kind of numerical basis as well, it is preferred that the prism sheet 7 is formed of PC resin rather than polyester resin, thereby supporting that the frequency of warp occurrence on the reflective polarizing sheet 6 is reduced.

The coefficient of linear expansion in the transmission axis direction (the first direction) that is more readily expandable direction of the reflective polarizing sheet 6 is approximated to the coefficient of linear expansion of the prism sheet 7 in the direction corresponding to the transmission axis direction of the reflective polarizing sheet 6 in the state that the reflective polarizing sheet 6 and the prism sheet 7 are in close contact with each other due to static electricity or the like. Although the expansion amount of the prism sheet 7 becomes larger in this way, it expands by heat approximately at the same rate as the reflective polarizing sheet 6 without forming warps even in the state that both sheets are in close contact with each other as shown in Fig. 3.

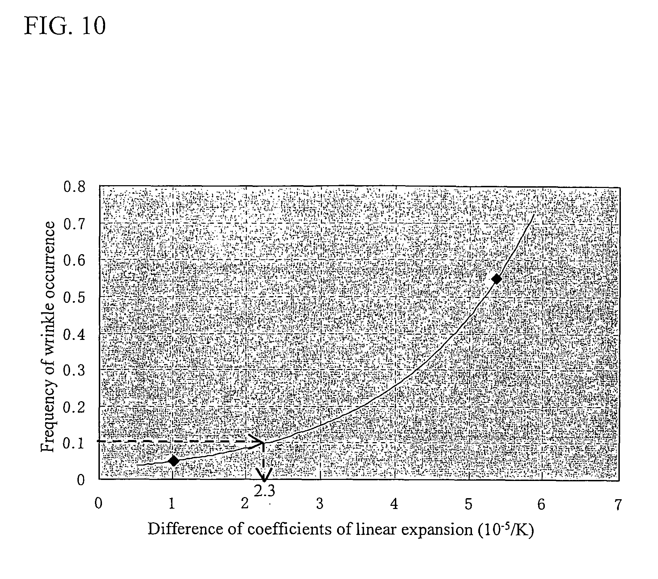

Here, the relation between the frequency of warp occurrence in the temperature environment tests and the difference between the coefficient of linear expansion of the reflective polarizing sheet 6 in the reflective axis direction and that of the prism sheet 7 is shown in Fig.10.

In this graph, the vertical axis represents the frequency of warp occurrence and the horizontal axis represents the difference between the coefficient of linear expansion of the prism sheet and that of the reflective polarizing sheet in the transmission axis direction. In addition to the obtained test results, the graph was made on the presumption of a curve fitting an exponential approximation equation as illustrated, assuming that changes in the frequency of warp occurrence increase as the difference of the coefficients of linear expansion shown on the horizontal axis becomes larger because the mechanism of warp occurrence is at random.

In order to decrease the defective fraction in production due to warp occurrence on the optical sheets to lower than 10%, it can be said that the difference in the coefficients of linear expansion should be desirably set to about 2.3 or lower as is apparent from Fig.10.

In other words, it is desirable that the following equation is met:

$$|(\text{Coefficient of linear expansion of the prism sheet } 7)-(\text{Coefficient of linear expansion of the reflective polarizing sheet } 6 \text{ in the transmission axis direction})|<2.3\times10^{-5}/K$$

More specifically, the coefficient of linear expansion of the prism sheet 7 relative to that of D-BEF-M (registered trademark) produced by 3M Co. in the transmission axis direction (the first direction) should desirably meet the following equation:

$$(\text{Coefficient of linear expansion of the prism sheet})$$
$$=(7.62\pm2.3)\times10^{-5}/K$$
$$=9.92 \text{ to } 5.32\times10^{-5}/K$$

In the foregoing, the case where the transmission axis direction (the first direction) was set to the horizontal direction and the reflection axis direction (the second direction) was set to the vertical direction as shown in Fig. 2B in the arrangement state of the reflective polarizing sheet 6 was explained. On the other hand, the second direction (the reflection axis direction) and the first direction (the transmission axis direction) may be arranged to the horizontal direction and the vertical direction, respectively.

Since display devices are generally landscape (e.g., length:breadth = 3:4, length:breadth = 9:16, etc.), the arrangement of the transmission axis direction (the first direction) to the horizontal direction and of the reflection axis direction (the second direction) to the vertical direction gives a higher preventive effect on warp formation on the optical sheets because the expansion of the reflective polarizing sheet in the longer breadth direction can be coordinated with the expansion of the adjacent optical sheet.

As to the reflective polarizing sheet 6 and the prism sheet 7 explained in the present embodiment, the reflective polarizing sheet 6 has a large expansion rate (coefficient of linear expansion) in the specific direction (the transmission axis direction) and a rigidity smaller than that of the adjacent prism sheet 7. Therefore, the reflective polarizing sheet 6 is more liable to be warped due to two causes that are expansion by heat and adhesion by static electricity. The technical concept of the present invention lies in that a larger expansion rate (coefficients of linear expansion) of an optical sheet in the first direction and the expansion rate of an adjacent optical sheet in nearly the same direction as the first direction are approximated, thereby preventing warp occurrence on the optical sheets. It is needless to say that warp occurrence can be reduced by this approximation regardless of certain variations in rigidity.

As to the reflection axis direction (the second direction), the coefficient of linear expansion is small as described above, and therefore, there is no problem in the present embodiment. Even when the coefficient of linear expansion in the second direction is large, it should be noted that warp formation can be prevented by approximating the coefficient of linear expansion of the adjacent second optical sheet in the direction corresponding to the above second direction to the coefficient of linear expansion of the first optical sheet in the second direction.

In the present embodiment, the reflective polarizing sheet 6 is used for the first optical sheet and the prism sheet 7 is used for the second optical sheet. As long as an optical sheet having a large coefficient of linear expansion (larger than a specified value: e.g. a coefficient of linear expansion of $5.0\times10^{-5}/K$ where the expansion amount becomes particularly problematic (a case where an expansion amount exceeding 1 mm is generated in a temperature change range of 50 degrees C for a liquid crystal TV set with a 20-inch or larger size )) in the specific direction (the first direction) is used for the first optical sheet and an optical sheet that is arranged adjacently to the first optical sheet is used for the second optical sheet, warp formation on the optical sheets can be prevented efficiently by applying the present technical concept, thus not limiting only to the optical sheets explained in the present embodiment. The sheet to be used for the second optical sheet includes, for example, wave sheet, diffusion sheet, and ITO sheet.

The wave sheet is used for the same purpose as for the prism sheet 7 and can be substituted for the prism sheet 7.

The diffusion sheet can also be sometimes substituted for the prism sheet 7. When the diffusion sheet is used in place of the prism sheet 7 in Fig. 1A, it becomes adjacent to the reflective polarizing sheet 6, thereby allowing the present invention to be applied.

The ITO sheet is used to unify a ground for the optical sheets in the panel with the housing 2 to lessen a striping of screen. The ITO sheet is frequently used by adding to the structure shown in Fig. 1A. Thin metal film is attached to one side (panel side) of the ITO sheet which is fixed to the housing 2 with metal edge fittings to unify a ground with the latter. However, it is difficult to completely remove static electricity from the sheets in contact with the ITO sheet. Therefore, it is preferred that warp formation is prevented according to the present invention even when the ITO sheet is arranged adjacently to the first optical sheet.

It goes without saying that warps are not formed by designing optical sheets according to the present invention even if there is no generation of static electricity (only sheet expansion occurs by heat).

Second Embodiment

The present embodiment is characterized by the structure in which a reflective polarizing sheet is used for the first optical sheet, a prism sheet or a wave sheet is used for the second optical sheet, and this second optical sheet 7 is arranged on the side of the liquid crystal panel 8 with respect to the adjacent reflective polarizing sheet 6. The reason of this structure is that color irregularity on the screen caused by contact of the reflective polarizing sheet 6 with the liquid crystal panel 8 can be reduced. Namely, when the diffusion plate 5 is bent, for example, toward the liquid crystal panel side by a certain cause and the reflective polarizing sheet 6 directly comes into contact partially with the liquid crystal panel 8, color difference is generated on the display screen between the partial contact area and non-contact area, resulting in color irregularity. This is caused by a change, by heat, of the orientation state of a polarizing plate present in the glass surface of the liquid crystal panel 8. In other words, the reflective polarizing sheet 6 is heated by the heat generated by a lamp 1, etc., and the heat transfer to the liquid crystal panel 8 differs between the contact area of the liquid crystal panel 8 and the reflective polarizing sheet 6 and their non-contact area.

In the contact area, heat is transferred by conduction from the reflective polarizing sheet 6, while in the non-contact area, heat is transferred not by conduction but by thermal radiation, thus giving rise to difference in heat distribution on the screen.

On account of this phenomenon, it is problematic in quality to arrange the reflective polarizing sheet 6 adjacently to the liquid crystal panel 8 and allow them to contact each other.

For this reason, in the liquid crystal display device according to the present invention, the second optical sheet 7 represented by the prism sheet or the wave sheet is placed on the side of the liquid crystal panel 8 , that is, between the liquid crystal panel 8 and the reflective polarizing sheet 6. Since the prism surface of the prism sheet 7 or the wave surface of the wave sheet has asperities, its contact area with the liquid crystal panel 8 is reduced and their thermal contact can be avoided as much as possible. In this way, local heat transfer to the liquid crystal panel surface can be prevented, and color stain and color irregularity on the display screen can be prevented.

Third Embodiment

When a prism sheet or a wave sheet is used for the second optical sheet 7 as described in the embodiment 2, moiré that is optical interference fringe may sometimes occur between the prism pitch spaces of microprism structure provided for these sheets and the pixel pitch spaces of the liquid crystal panel 8.

For this reason, the present embodiment is structured as follows:

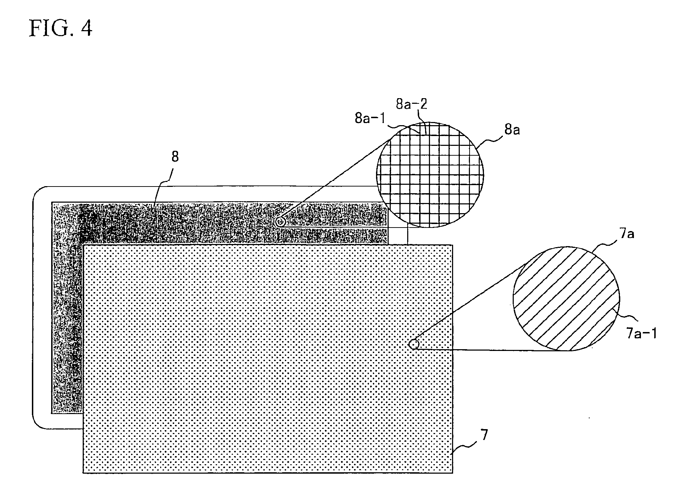

Fig. 4 illustrates the relation between a second optical sheet according to the present embodiment and the liquid crystal panel 8.

The pixels constituting the liquid crystal panel is generally arranged in a matrix (two dimensionally in the vertical and horizontal directions) as shown by a symbol 8a in Fig. 4 (each direction of symbols 8a-1 and 8a-2 in Fig. 4). In contrast, as shown by a symbol 7a in Fig.4, an array direction for prism or wave is not coordinated with the vertical direction or the horizontal direction, but is arranged with a certain rotational angle around the axis of the normal direction of the screen (a symbol 7a in Fig. 4). The above-mentioned moiré phenomenon can be eliminated by providing a prism sheet or a wave sheet with an appropriate tilt angle.

As to the arrangement direction for the reflective polarizing sheet 6, it is better to arrange the transmission axis direction with significant thermal expansion so as to correspond with the short side direction of the display screen. Thermal expansion of the reflective polarizing sheet 6 in the long side direction of the screen can be minimized by arranging the direction readily susceptible to thermal expansion to the short side direction of the screen rather than to its long side direction. It should be noted that the transmission axis of a polarizing glass facing the backlight side of the polarizing glasses provided for the liquid crystal panel 8 is arranged to the short side direction in conformity with the transmission axis of the reflective polarizing sheet 6. Thus, the parallel arrangement of the transmission axis direction of the reflective polarizing sheet 6 and the short side direction of the liquid crystal display portion allows not only thermal expansion of the reflective polarizing plate in the long side direction of the display screen to be reduced, but also thermal expansion of the reflective polarizing sheet 6 in the transmission axis direction to be reduced. Therefore, unevenness of brightness that might appear on the liquid crystal screen due to warps of the reflective polarizing sheet 6 can be prevented.

Fourth Embodiment

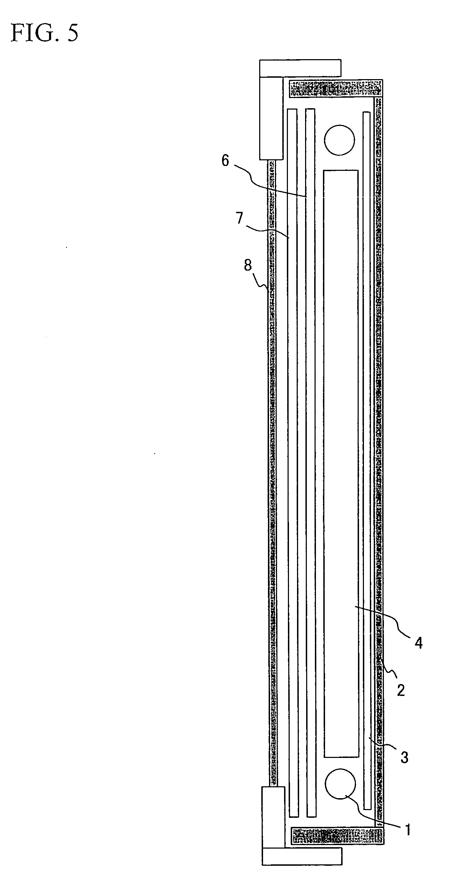

Fig. 5 depicts one structural example of the backlight unit according to the present embodiment. As shown in Fig. 5, the liquid crystal display device is provided with the light sources 1, the housing 2, the reflection plate 3, the light guide plate 4, the reflective polarizing sheet 6, and the prism sheet 7. A liquid crystal display device is constructed by providing this backlight unit with the liquid crystal panel 8. This structure differs from that of Fig. 1 in that the number of the light sources 1 is decreased with the use of a light guide plate 4.

The liquid crystal display device according to the present embodiment is structured by arranging, for example, the light sources 1 each provided on both edges of the backlight unit, the light guide plate 4 that homogenizes light from the light sources 1, the sheet-type reflection plate 3 that is provided on one side (rear side) of the light guide plate 4 and reflects light to the side of the light guide plate 4, and the housing 2 that houses these. On the other side (front side) of the light guide plate 4, the following are arranged in turn from the side of the light sources 1: the reflective polarizing sheet 6 that selectively reflects/transmits light from the light guide plate 4, the prism sheet 7 that efficiently guides light transmitting through the reflective polarizing sheet 6 to the liquid crystal panel 8, and the liquid crystal panel 8 that displays pictures by light guided through the prism sheet. The light guided from the edge where the light sources 1 are placed into the light guide plate 4 is emitted to the other side (front side) with total reflection occurring inside the light guide plate 4.

As in the case of the first embodiment, it is desirable that the material for the prism sheet 7 has approximately the same thermal expansion rate (coefficient of linear expansion) as that of the reflective polarizing sheet 8 in the transmission axis direction and that its value is approximately 6 to $9 \times 10^5$/K. Specific materials to form the prism sheet 7 are also the same as those in the first embodiment. For the second optical sheet, any of the prism sheet, wave sheet, diffusion sheet, and ITO sheet may be included. A structural arrangement to hold the prism sheet 7 between the reflective polarizing sheet 6 and the liquid crystal panel 8 in the same way as described above can eliminate color stain and unevenness of color on the liquid crystal panel 8 and is more effective.

The backlight unit and the liquid crystal display device according to the present invention can be applied to liquid crystal TV and the like.

## Claims

1. A backlight unit comprising:

   a first optical sheet having coefficients of linear expansion different between a first direction and a second direction in a plane with the coefficient of linear expansion in the first direction larger than that in the second direction; and
   a second optical sheet arranged adjacently to the first optical sheet,

   wherein the coefficient of linear expansion of the first optical sheet in the first direction and that of the second optical sheet in the direction corresponding to the first direction are approximated to each other.

2. A backlight unit comprising:

   a first optical sheet with a coefficient of linear expansion larger than a predetermined value in a first direction in a plane; and
   a second optical sheet arranged adjacently to the first optical sheet,

   wherein the coefficient of linear expansion of the first optical sheet in the first direction and that of the second optical sheet in the first direction are approximated to each other.

3. The backlight unit according to claim 1 or 2, wherein
   the first optical sheet is a reflective polarizing sheet;
   the second optical sheet is at least any one of the sheets selected from the group consisting of a prism sheet, a wave sheet, a diffusion sheet, and an ITO sheet; and
   the first direction is the transmission axis direction of the reflective polarizing sheet.

4. The backlight unit according to any one of claims 1 to 3,
   wherein the second optical sheet is formed of at least any one of the materials selected from the group consisting of a polycarbonate resin, a polystyrene resin, a polyacetal resin, and a nylon 6 resin.

**5.** The backlight unit according to any one of claims 1 to 4,
wherein the second optical sheet is arranged on the side opposite to light sources provided in the backlight unit with respect to the first optical sheet.

**6.** A liquid crystal display device comprising:

the backlight unit according to any one of claims 1 to 5; and
a liquid crystal panel irradiated with light from the backlight unit.

**7.** A liquid crystal display device comprising:

the backlight unit according to claim 1 or 2; and
a liquid crystal panel irradiated with light from the backlight unit, wherein
the first optical sheet is a reflective polarizing sheet, and
the transmission axis direction of the reflective polarizing sheet and the short side direction of the liquid crystal panel are arranged in parallel.

**8.** The liquid crystal display device according to claim 5 or 6,
wherein the prism sheet or the wave sheet is used for the second optical sheet and an array direction of the prism or the wave is arranged with a rotation around the axis of the normal direction of the screen by a certain angle with respect to the vertical direction or the horizontal direction of pixel array provided on the liquid crystal panel.

FIG. 1 A

FIG. 1 B

First direction

Second direction

FIG. 2 A

FIG. 2 B

FIG. 3 A

FIG. 3 B

Expansion

FIG. 4

FIG. 5

FIG. 6 A

FIG. 6 B

FIG. 7

FIG. 8

FIG. 9 A

FIG. 9 B

FIG. 10

# EP 1 653 277 A1

## INTERNATIONAL SEARCH REPORT

| International application No. |
|---|
| PCT/JP2004/010094 |

### A. CLASSIFICATION OF SUBJECT MATTER
Int.Cl$^7$ G02F1/13357, F21S4/00, F21Y103:00

According to International Patent Classification (IPC) or to both national classification and IPC

### B. FIELDS SEARCHED

Minimum documentation searched (classification system followed by classification symbols)
Int.Cl$^7$ G02F1/13357, F21S1/00, F21Y103:00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2002-526808 A (3M Innovative Properties Co.), 20 August, 2002 (20.08.02), Par. Nos. [0010] to [0011], [0057] to [0068]; all drawings & WO 2000/020910 A1 Page 3, lines 8 to 31; page 22, line 5 to page 28, line 17; all drawings & US 6160663 A & EP 1118032 A | 1-8 |
| Y | WO 2000/057240 A1 (Hitachi, Ltd.), 28 September, 2000 (28.09.00), Page 10, lines 12 to 13; Fig. 1 a (Family: none) | 1-8 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 September, 2004 (24.09.04) | 12 October, 2004 (12.10.04) |

| Name and mailing address of the ISA/ Japanese Patent Office | Authorized officer |
|---|---|
| Facsimile No. | Telephone No. |

Form PCT/ISA/210 (second sheet) (January 2004)

## INTERNATIONAL SEARCH REPORT

| | International application No. |
|---|---|
| | PCT/JP2004/010094 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-43222 A (Yukadenshi Co., Ltd.), 13 February, 2003 (13.02.03), Par. No. [0035] (Family: none) | 1-8 |
| Y | JP 2000-30519 A (Enplas Corp.), 28 January, 2000 (28.01.00), Par. Nos. [0010], [0027] to [0078]; all drawings (Family: none) | 3-8 |
| Y | JP 2003-177220 A (Dainippon Printing Co., Ltd.), 27 June, 2003 (27.06.03), Par. No. [0025] (Family: none) | 4-8 |
| Y | JP 9-506985 A (Minnesota Mining & Mfg. Co.), 08 July, 1997 (08.07.97), Page 15, lines 10 to 22; Fig. 9 & WO 1995/017692 A1 Page 13, lines 5 to 18; Fig. 9 & US 2001/8464 A1 & EP 736188 A | 5-8 |
| Y | JP 10-333131 A (Matsushita Electric Industrial Co., Ltd.), 18 December, 1998 (18.12.98), Par. No. [0008]; Fig. 14 & US 6219113 B1 Column 8, lines 20 to 22; Fig. 14 | 7-8 |

Form PCT/ISA/210 (continuation of second sheet) (January 2004)